# EUROPEAN PATENT APPLICATION

(11) **EP 1 232 776 A2**
(43) Date of publication of application: **21.08.2002**
(21) Application number: 01118796.0
(22) Date of filing: 09.08.2001
(51) Int. Cl.: A63F 13/02

(54) **Smart card, method for loyalty program using smart card, and smart card system**

(30) Priority: 14.02.2001 JP 2001036574
(71) Applicant: Hitachi, Ltd., Chiyoda-ku, Tokyo (JP)
(72) Inventor: Sukeda, Hiroko, Hitachi, Ltd., Int. Prop. Gp., Chiyoda-ku, Tokyo 100-8220 (JP); Ohki, Masaru, Hitachi, Ltd., Int. Prop. Gp., Chiyoda-ku, Tokyo 100-8220 (JP); Ozeki, Kazuhiro, Hitachi, Ltd., Int. Prop. Gp., Chiyoda-ku, Tokyo 100-8220 (JP); Fujita, Kazuo, Hitachi, Ltd., Int. Prop. Gp., Chiyoda-ku, Tokyo 100-8220 (JP); Suzuki, Kunio, Hitachi, Ltd., Int. Prop. Gp., Chiyoda-ku, Tokyo 100-8220 (JP)
(74) Representative: Beetz & Partner Patentanwälte

(57) **Abstract**

[Problem] Providing a loyalty program with game that executes games on a smart card (100), wherein the loyalty program with game can also be used as a simple loyalty program without game, no major modifications need not be made to shop terminals, and the number of times customers can play games can be limited according to sales amounts.

[Solving Means] Point data managed by a point application is divided into two types: "pre-game points" and "post-game points." In shops, points are added to the pre-game points. For game execution, the pre-game points are subtracted, and points gained by game are added to the post-game points.

[Effect] Shop terminals need not be modified, and customers not to play game can also enjoy reasonable exchange of gained points. From the viewpoint of system management, by limiting the number of times customers can play game, points gained by game can be prevented from circulating infinitely.

## Description

### [Industrial Field of Utilization]

The present invention relates to a smart card capable of storing an application program in a computer system with high security, particularly a nonvolatile memory, a smart card system based on the smart card, and a method for loyalty program employing the smart card.

### [Prior Art]

A smart card that incorporates a CPU (Central Processing Unit) in an IC chip and can perform operations inside the card has a high information storage capability and provides high security. For this reason, it is expected to be used in various fields and, in recent years, has been actively introduced particularly in the financial field such as electronic money.

In recent years, a card OS (Operating System) that enables plural applications to coexist safely on one card has come into common use. Multi-application supporting smart cards managed by such an OS are controlled to enhance independence among application programs, and can not only safely hold plural applications but also add new applications after issuance of the cards and delete unnecessary application programs. Such smart cards are not mere information storage media but can be considered a safe computer system.

The smart cards, to take advantage of the high security of the cards or replace conventional magnetic card functions, are expected to come into widespread use in the financial field such as credit cards and electronic money, particularly in linkage of plural applications.

Conventionally, systems such as loyalty programs or point reward systems (hereinafter referred to as loyalty programs) have been commonly used to attract customers. These systems, which are defined as "systems in which points are added according to customers' utilization history and proper services are offered according to the number of accumulated points", intend to prompt customers to utilize shops and cards from expectation to bonuses obtained by gaining points.

Examples of these systems are shopping malls' stamp cards, department stores' loyalty programs, and airlines' mileage programs. For example, in department stores' loyalty programs, when a membership carrying a card of a department store presents the card when shopping at the department store, points are accumulated according to the sales together with the purchase history (e.g., 20 points are added for each purchase of 1000 yen), and when a certain number of points are accumulated, the points can be exchanged with a ticket certificate usable in the department store (e.g., 1000 points can be exchanged with a gift certificate of 1,000 yen. Namely, for each purchase of 50,000 yen, memberships can receive a discount of 1,000 yen). To increase consumers' purchase incentives, a point addition rate may be doubled during a campaign period or a discount rate may be increased for yearly purchase amounts beyond specified amounts.

As another example, in the case of airlines' mileage programs, flight distances are accumulated instead of purchase amounts, and when given flight distances are reached, a free flight ticket or seat upgrade service is offered. Also in this case, by providing a service according to memberships' utilization history, the memberships are motivated to select the same airline.

In such a loyalty program, by storing customer's point information in a smart card, a more flexible system can be safely offered and the usability of customers and system administrator can be increased. In multi-application supporting smart cards, plural applications can be effectively linked in combination with electronic money and credit card functions.

The inventor et al. add game functions to such a loyalty program and are proposing a smart card system in which a loyalty program with game is installed, wherein the loyalty program with game changes the value of points according to the result of executing game stored in the card. One invention in the smart card system is disclosed in JP-A-207470/2000. According to the invention, the number of times customers can play game is defined as rights to play game, and a method is described which enables the game to be safely executed in a smart card program by managing the rights to play game and the value of points resulting from game execution. In addition to mere use of smart cards to accumulate points as data storage means, by designing the smart cards so as to change the value of points according to the result of game executed inside the smart cards, the merits of using the smart cards can be further increased, contributing to widespread use of the smart cards.

### [Problem to be Solved by the Invention]

In conventional simple loyalty programs, points are issued to a card from a terminal at a shop, and the points are accumulated in the card (or server) and afterward are exchanged with a proper item or service. On the other hand, in loyalty programs with game, rights to play game are issued to a card at a terminal of a shop, and points of different values are stored according to game results.

However, to issue the rights to play game at shops requires that shop terminals have a game issue function. Where terminals having a function to issue points already exist in the shops, if shop terminals having the game issue function were required, an enormous number of shop terminals would have to be modified. Some customers may want to utilize accumulated points without playing game, or others may have no environment or time to play game. Customers not to play games must not suffer unreasonable disadvantages in point exchange.

One method for solving this problem is to issue points to smart cards from shop terminals, use points inside the card during game execution (points of predetermined value are subtracted for game to be executed), and increase the points according to game results. With this method, however, since points gained by game can be used in the next game execution, customers can theoretically play games an unlimited number of times, with the result that not only it becomes difficult to keep track of point distribution in the overall system but also there is fear to excessively stir up customers' passion for gambling.

An object of the present invention is to provide a loyalty program with game that executes games on a smart card, wherein the loyalty program with game can also be used as a simple loyalty program without game, no major modifications need not be made to shop terminals, and the number of times customers can play games can be limited using a loyalty program provided to the smart card according to sales amounts.

### [Means for Solving the Problem]

To solve the above described problem, points managed by a point application with game of a smart card are divided into two types: "pre-game points" and "post-game points." The pre-game points are defied as first points and the post-game points are defined as second points.

In shops, points of value in accordance with card utilization are issued to the card. In the smart card, the received points are added to "pre-game points." The "pre-game points" are points usable during game execution. During game execution, for the game to be executed, a predetermined point value is subtracted from the "pre-game points." Points gained according to game results are added to "post-game points." Although the remaining "pre-game points" can be used for the next game execution, "post-game points" gained by game execution cannot be used. By this arrangement, the number of times customers can play games is limited to prevent points gained by games from circulating infinitely.

When a remaining point value is inquired, the sum of "pre-game points" and "post-game points" is presented. In some cases, the sum, the pre-game points, and the post-game points may be respectively presented. When points accumulated in a smart card are exchanged with a service or a free gift, although the sum of these points is used for the exchange, the "post-game points" are firstly subtracted. Where the value of "post-game points" is smaller than a point value necessary for exchange, "pre-game points" are subtracted if sufficient. By this arrangement, those who do not play games can validly exchange points by utilizing a card, and those who want to play games are permitted for the next game execution if remaining "pre-game points" are sufficient.

Where a refund occurs for return or other reasons, corresponding "pre-game points" are subtracted. However, if a remainder is insufficient because of executed games, "post-game points" are subtracted by an insufficient value. If the remainder is not satisfied by the sum of "pre-game points" and "post-game points", it is a common practice to perform processing so that one of "pre-game points" and "post-game points" is minus.

The characteristics of means for solving the problem of the present invention are summarized as follows.
(1) Point data managed by a point application is divided into two types: "pre-game points" and "post-game points."
(2) When points are issued according to card utilization in shops, the issued points are added to "pre-game points."
(3) When game is executed using a game execution terminal, a point value corresponding to the game to be executed is subtracted from "pre-game points." Points gained by game execution are added to "post-game points." "Post-game points" cannot be used for game execution.
(4) When a remaining point value is inquired, the sum of "pre-game points" and "post-game points" is presented as a current point value. As required, the contents of it are shown.
(5) At the time of point exchange, although point exchange is performed for the sum of "pre-game points" and "post-game points", "post-game points" are firstly subtracted.
(6) Where a refund occurs for return or other reasons, "pre-game points" are subtracted. However, if a remainder is insufficient because of executed games, "post-game points" are subtracted by an insufficient value.

To solve the above described problem and achieve the above described object, the present invention provides a method for loyalty program using a smart card, comprising the steps of: managing points by an application program on the smart card; issuing the points at the time of product purchase and adding them to the smart card; providing a proper service to customers not playing game, according to points accumulated in the smart card; and for customers to play the game, using the points added to the smart card without using points gained from game results.

In the above described method for loyalty program, the step, for customers to play the game, of using the points added to the smart card without using points gained from game results includes the step of subtracting a predetermined point value corresponding to the game to be executed from the points managed by the application program to limit the number of times the customers can play games.

### [Preferred Embodiments]

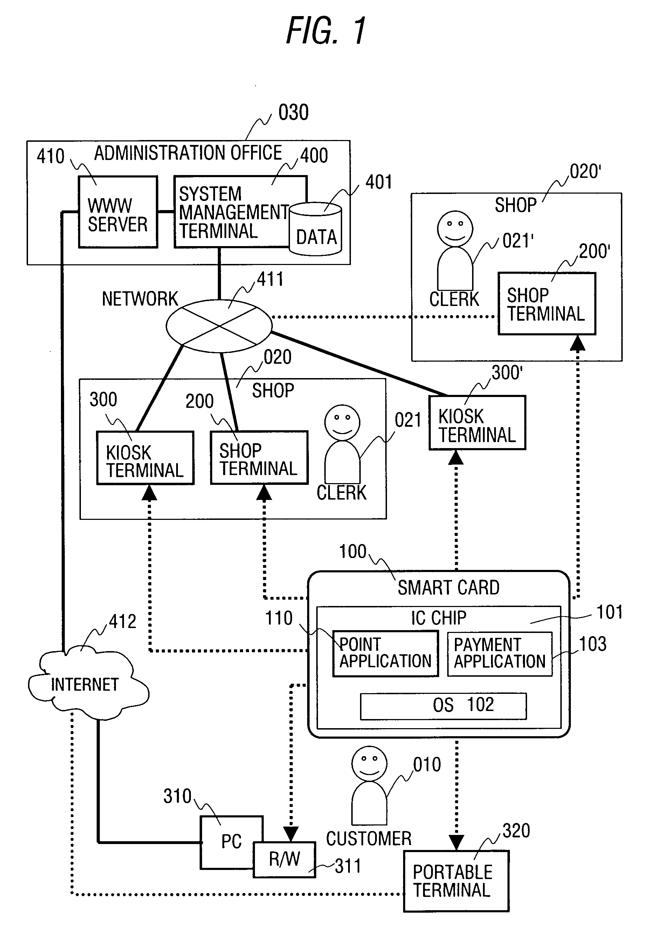

FIG. 1 shows the system configuration of a loyalty program using a smart card that can be embodied by the present invention. System components include: smart card 100 owned by customer 010; system management server 400 in administration office 030 administrating the overall system; shop terminal 200 placed in each shop 020; KIOSK terminals 300 and 300' installed in the shop 020 or outside the shop; and PC 310 or portable terminal 320 for the customer to access the smart card. The PC 310 and portable terminal 320 are not indispensable to the system configuration; the smart card 100, the system management server 400, the shop terminal 200, and KIOSK terminal 300 are mandatory components.

The customer 010 holds the smart card 100 in advance issued, which incorporates card OS 102 onto which point application 110 is loaded. In this example, payment application 103 such as electronic money and credit, and the point application used in the system are separately loaded.

In the system management server 400, customer information, point information, shop information, and other information in the system are stored in a data storage device 401. If required, WWW server 410 may be provided to enable the customer to gain access via the Internet; the WWW server 410 is not always required.

Each shop 020 has at least one of shop terminals 200 for carrying out communications with the smart card 100. It is desirable that the shop terminals 200 are operated mainly by the clerk 021, and processing can be performed for both the payment application 103 and the point application 110 on the smart card 100. For system's convenience, processing may be performed at different terminals for different applications: in this case, many redundant portions would occur. It is desirable but not mandatory that the shop terminals 200 are connected with a shop register. The shop 020 may, in some cases, have the KIOSK terminal 300 through which the customer himself gains access to the smart card. It would be more useful that several KIOSK terminals 300 are installed not only within shops but also in places readily available to the customer 010 such as, e.g., spaces within a shopping mall. The shop terminals 200 and KIOSK terminals 300 are connected with the system management server 400 over a network 411 to enable data exchange as required, regardless of full-time connection or emergency connection.

The customer may hold the PC 310 or portable terminal 320 connected to the Internet to access and operate the smart card 100 at home or away from home. The PC 310 must be provided with an smart card reader/writer (R/W) 311. The PC 310 can perform communications with the WWW server 410 via the Internet 412 and also exchange information with the system management server 400. The portable terminal 320 has a slot for inserting the smart card 100 so that the customer can easily view and operate the contents of the smart card 100. The portable terminal 320 can access the system management server 400 via the Internet as required.

The shop terminals 200, the KIOSK terminals 300, the PC 310, and the portable terminal 320 respectively have the function for carrying out communications with the smart card 100. Through these terminals, the customer 010 and the clerk 021 perform processing for the card. The processing for the card includes settlement processing such as payment and reload in the case of the payment application 103, and processing such as point addition, point exchange, or game processing described later in the case of the point application 110.

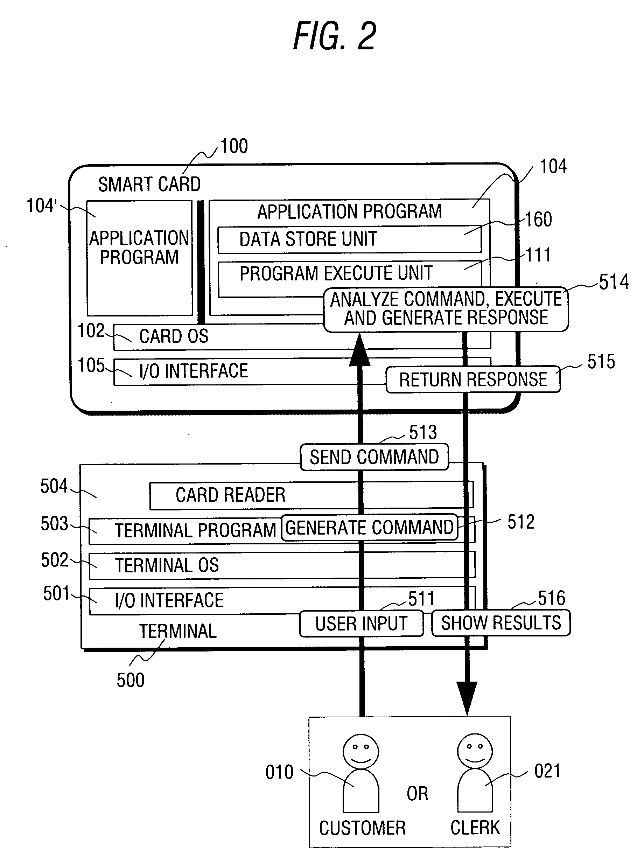

Next, referring to FIG. 2, a brief description will be made of the flow of information in typical program execution on a multi-application smart card. The smart card 100 includes card OS 102 and I/O interface 105, and has one or more application programs 104 loaded by a predetermined procedure. In the drawing, an application program 104 and an application program 104' are different, independent programs, and it is prohibited that one of them illegally accesses data of the other. A terminal 500 includes a card reader 504, I/O interface 501, and terminal OS 502, and has at least one terminal program 503 loaded to handle the application programs in the smart card loaded. Usually, one or more terminal programs are required for one of application programs on the smart card.

When the customer 010, clerk 021, or other persons to perform operations on the smart card 100 make input to the terminal 500 through the I/O interface 501 (511), the terminal program 503 generates a command for sending to the smart card (512). The terminal program 503 sends the command to the smart card 100 through the card reader 504 (513). When the smart card 100 receives the command through the I/O interface 105, the card OS 102 determines the application program 104 to which the command is to be sent, and sends the command to the application program 104 specified by the terminal. Program execute unit 111 in the application program 104 performs processing according to the command, accesses application data store unit 160, updates values, and generates a response (514). The response is returned to the terminal 500 through the card I/O interface 105 (515), and the terminal program 503 displays the result (516). This is the flow of a series of steps of program execution.

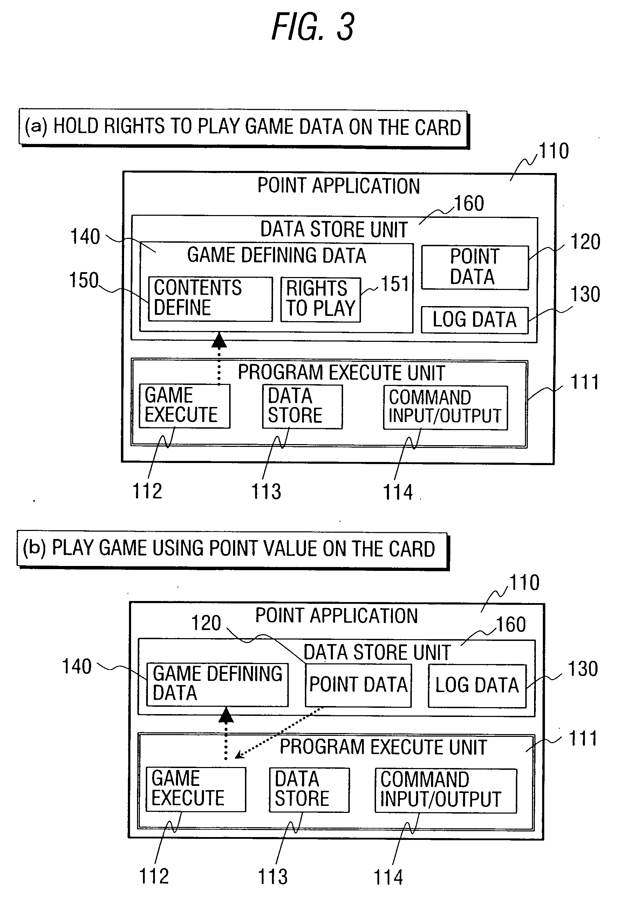

Next, referring to FIG. 3, a description will be made of a smart card program in a point application with game that can be embodied by inventions already filed. In?JJapanese publication number 2000-207470, a basic scheme of a loyalty program with game is described, and in Japanese application number 11-369142 filed thereafter, a description is made of a method for handling plural types of games by a single application by introducing a script to define game and an interpreter for interpreting and executing the script. Described in common to these inventions are the system of issuing "rights to play game" in a shop and devaluing the rights for game execution, and the system of executing game using (decreasing) point data on the card.

FIG. 3 (a) shows the configuration of a smart card program in a loyalty program with game which issues the rights to play games in a shop. The point application 110 consists of a program execute unit 111 and a data store unit 160, and the program execute unit 111 consists of: game execute part 112; a data store part 113; and a command input/output part 114. The data store unit 160 stores point data 120, log data 130, and game defining data 140. The game defining data 140 can be divided into a portion 150 for defining game contents, and a portion 151 for defining the rights to play game. Where game types and execution procedures are fixed (JP-A-207470/2000), the contents define 150 is fixed except various parameters. On the other hand, in a program that can handle plural types of games (JP-A-369142/ 1999), the content define 150 is in the form of replaceable scripts. Although the rights to play definition 151 may be used with script data, basically it contains data on the rights to play game such as "how many times can which game be executed?", issued from shops according to card utilization in the shops.

During game execution, game is executed according to the definition of the contents define 150, and point data is updated according to game results. When the game has been executed, data on the rights to play game 151 is subtracted. During issuance of rights to play or game execution, a log is written to log data 130, but log updating and holding can be omitted because they are not indispensable to game execution.

FIG. 3 (b) shows the configuration of a smart card program in an application with game in the form in which the rights to play game are represented by points within the card. This configuration is different from that of FIG. 3 (a), in that the definition of rights to play is not independent and point data 120 is also used. Namely, subtracting the point data 120 for game execution corresponds to play right subtraction. The following two points are the same as those in FIG. 3 (a): executing game according to the game defining data 140 defining game contents and updating the point data 120 according to game results; and updating log information as needed.

In the system of FIG. 3 (a), since the rights to play game must be issued in a shop, a terminal of the shop must have a game issue function. Although there is no problem if shop terminals are designed from the beginning as a loyalty program with game, where shop terminals having a point issue function exist as a loyalty program without game, it is not easy to newly add a game issue function to all shop terminals.

In the system of FIG. 3 (b), although shop terminals need not be modified, since the point data 120 is used for game execution and points gained as a result of the game execution are returned to the point data 120, the cycle of playing game using points gained by game may be infinitely repeated and it becomes difficult for a system management side to keep track of the value of points held by customers. Even if log information generated in game execution terminals is managed in a sever, there is a possibility that customers can infinitely play game using a small point value, and as a result, undesirably to the management side, customers' passion for gambling may be excessively stirred up or trouble may be caused.

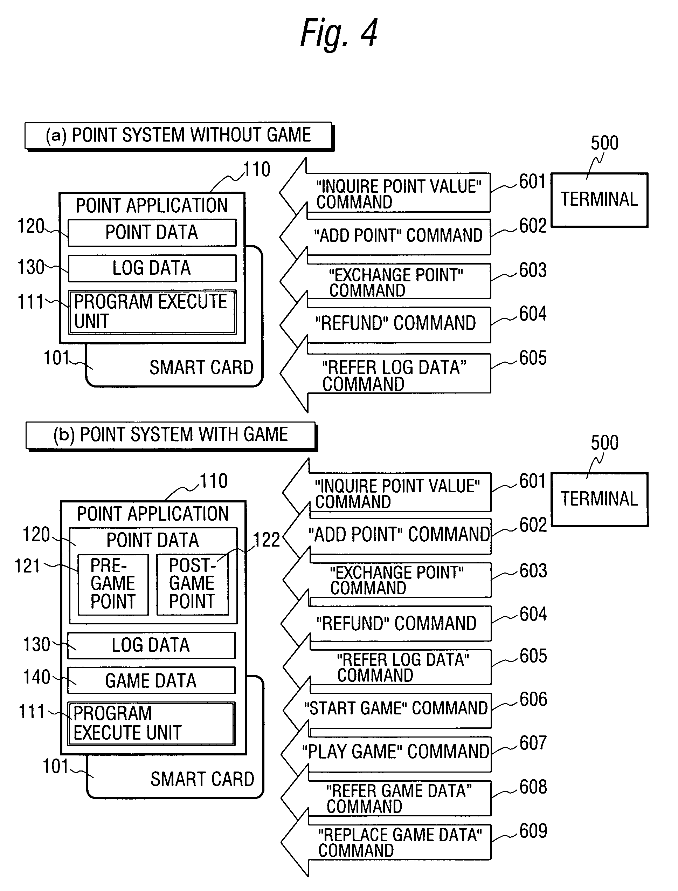

Accordingly, the inventor proposes the present invention as described in and after FIG. 4, which requires no modification to shop terminals having a point processing function and can limit the number of times customers can play game.

FIG. 4 shows the configuration of a point application program on a smart card in a loyalty program that can be embodied by the present invention.

FIG. 4 (a) shows the program configuration when a simple loyalty program without game is installed in the smart card. The point application 110 consists of the program execute unit 111, and a store unit storing point data 120 and log data 130 as a data unit. In a loyalty program without game, simple point management has only to be performed. Types of commands to the application 110 on the smart card from terminal 500 include at least "inquire point value" command 601, "add point" command 602, "exchange point" command 603, "refund" command 604, and "refer log data" command 605 if necessary. Additionally, a password-based protection function may be added.

FIG. 4(b) shows the program on the card changed so as to be available as a loyalty program with game in which the commands for the loyalty program in FIG. 4 (a) can be used without modification and to which several commands are newly added for game use. To play game, game data 140 is added to the data unit, and the point data 120 is divided into pre-game point 121 and post-game point 122. The pre-game point 121 is points issued from shops according to card utilization and can be used for game execution. Points gained according to game execution are stored in the post-game point 122. A total point value is the sum of the pre-game point 121 and the post-game point 122.

The program execute unit 111 performs the following processing.
(1) For an "inquire point value" command 601, return pre-game point 121, post-game point 122, and the sum of them.
(2) For an "add point" command 602, add points to pre-game point 121.
(3) For an "exchange point" command 603, determine from the sum of pre-game point 121 and post-game point 122 whether exchange is possible, and firstly subtract from post-game point 122.
(4) For a "refund" command 604, subtract points from pre-game point 121, and if the pre-game point 121 is insufficient, subtract points from post-game point 122 as well.

If processing as described above is performed, the same commands as in the loyalty program without game can be used without modification, terminals of shops not concerned in game execution need not be modified.

Although a "start game" command and a "play game" command are newly required to play game, these commands need to be issued only from terminals concerned in game execution and do not need to be issued from shop terminals. Although processing for a "refer game data" command 608 and a "replace game data" command 609 is also required to make game types replaceable, these commands do not need to be issued from shop terminals.

Therefore, according to the program configuration of the point application with game shown in FIG. 4(b), specifications of point commands in a loyalty program without game do not need to be modified, with the result that shop terminals do not need to be modified. Also, since points usable and those not usable for game execution are divided, it can be prevented that customers can infinitely play game using points.

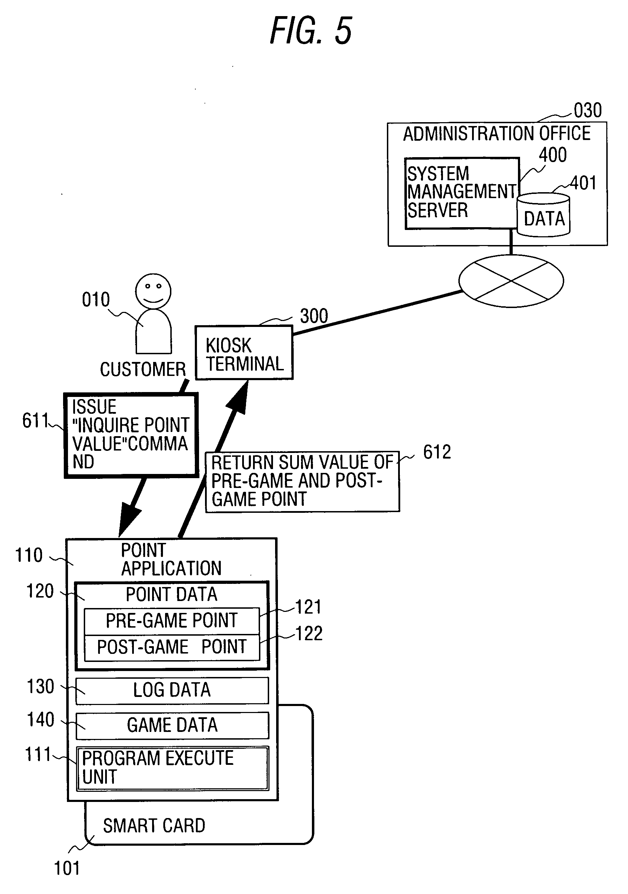

Next, referring to FIGS. 5 to 14, a description will be made of the flow of processing corresponding to the respective commands described above.

FIG. 5 shows the flow of processing of system components in point inquiry processing. Point inquiry processing is primarily performed by customers to confirm the current value of points in the card; when the customer 010 performs the processing for the KIOSK terminal, an "inquire point value" command 601 shown in FIG. 4(b) is issued (611). The point application 110 of the smart card 101 calculates the sum of pre-game point 121 and post-game point 122, and returns a response to the KIOSK terminal 300 (612). If a backup of point data is stored in the server 400, a current point value is confirmed through information communication with the server 400.

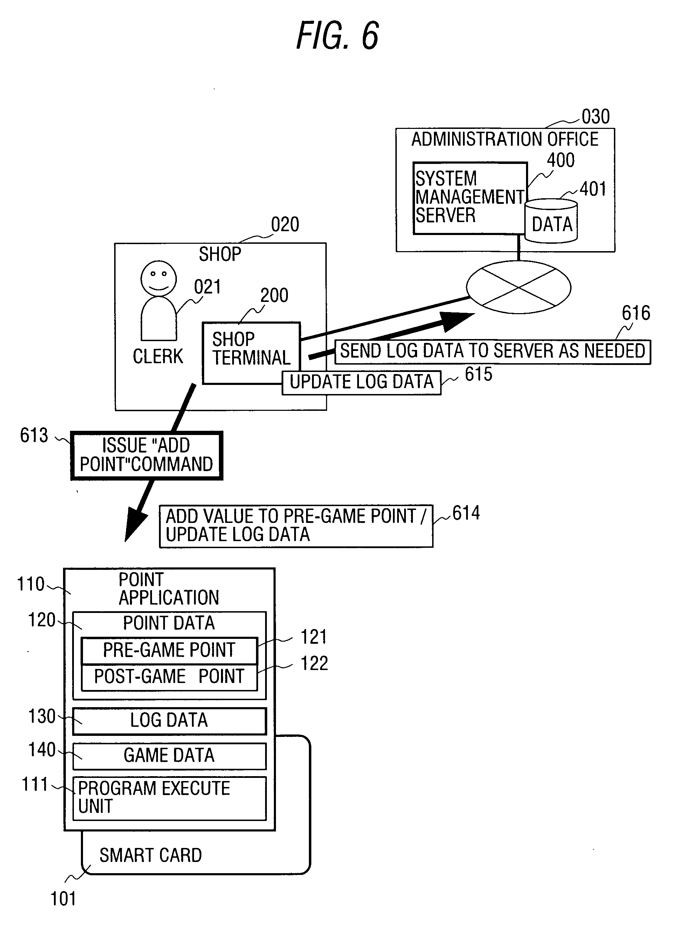

FIG. 6 shows the flow of processing of system components in point addition processing. Point addition processing is primarily performed in the shop 020 during card utilization; when the clerk 021 performs the processing for the shop terminal 200, an "add point" command 602 shown in FIG. 4(b) is issued from the shop terminal 200 (613). The point application 110 in the smart card 101 adds point to the pre-game point 121 and updates log data 130 (614). The shop terminal 200 adds a point addition log (615) and sends log data to the server 400 as needed (preferably in real time) (616). The server 400 adds the log data or a backup of point data to data 401.

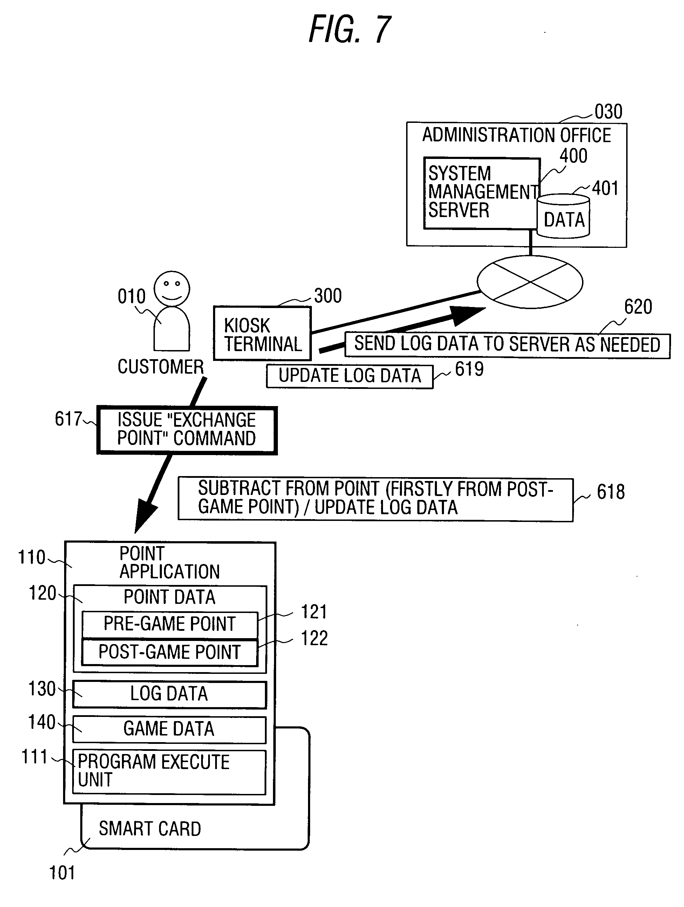

FIG. 7 shows the flow of processing of system components in point replacement processing. Point replacement processing is primarily performed by customers to exchange points in the card with a gift certificate or free gift; when the customer 010 performs the processing for the KIOSK terminal 300, an "exchange point" command 603 shown in FIG. 4(b) is issued from the KIOSK terminal 300 (617). The point application 110 of the smart card 101 subtracts firstly from the post-game point 122 (also from the pre-game point 121 if sufficient), and updates the log data 130 (618). The KIOSK terminal 300 adds point an exchange log (619) and sends log data to the server 400 as needed (preferably in real time) (620). The server 400 adds the log data or a backup of point data to data 401.

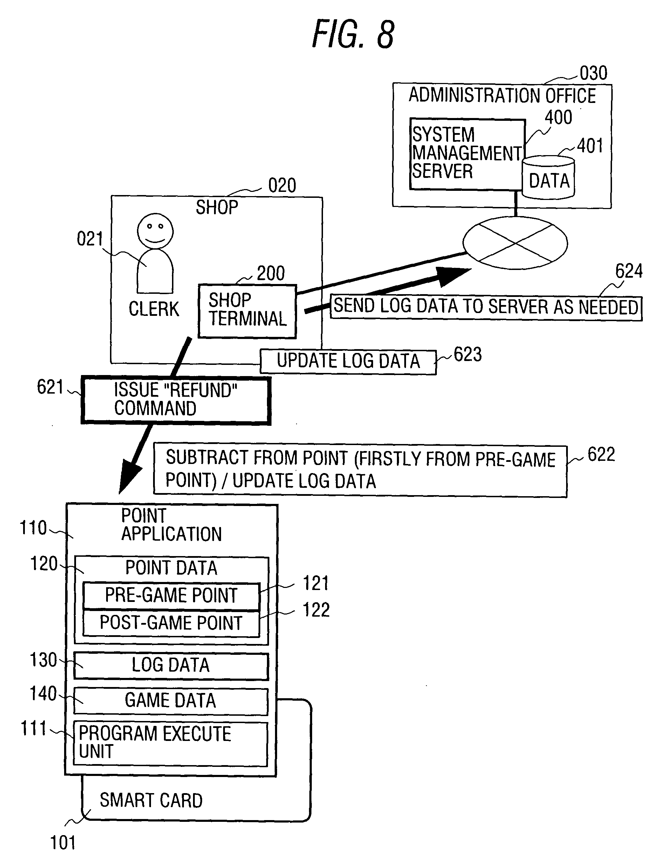

FIG. 8 shows the flow of processing of system components in refund processing. Point addition processing is primarily performed in the shop 020 to subtract a point value upon refund; when the clerk 021 performs the processing for the shop terminal 200, a "refund" command 604 shown in FIG. 4(b) is issued from the shop terminal 200 (621). The point application 110 of the smart card 101 subtracts points from the pre-game point 121 (also from the post-game point 122 if sufficient), and updates the log data 130 (622). A rule must be provided in advance to set minus points if the sum of the pre-game point 121 and the post-game point 122 is smaller than the point value for subtraction. The shop terminal 200 adds a point addition log (623) and sends log data to the server 400 as needed (preferably in real time) (624). The server 400 adds the log data or a backup of point data to data 401.

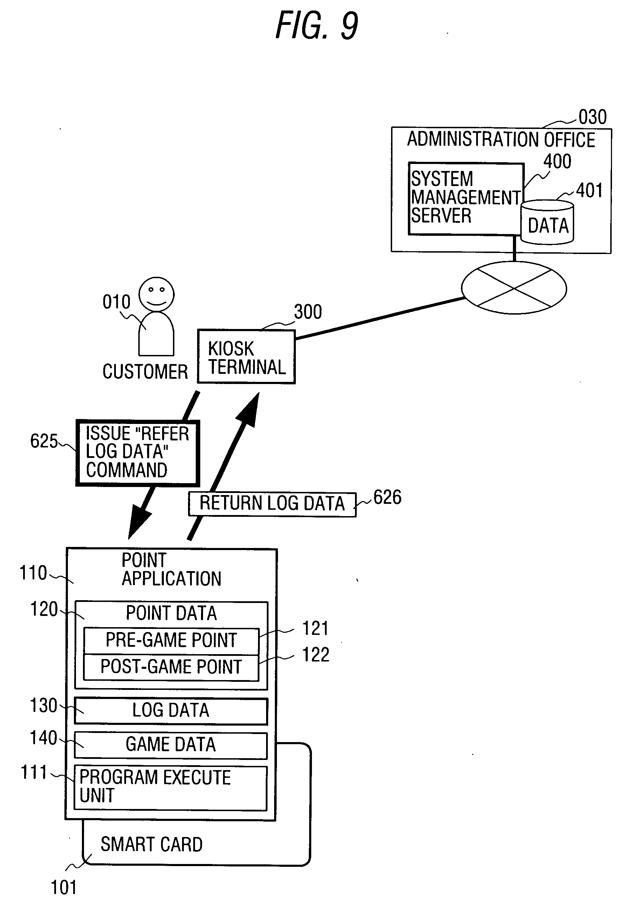

FIG. 9 shows the flow of processing of system components in log data reference processing. The log data reference processing is primarily performed by customers to confirm log data in the card; when the customer 010 performs the processing for the KIOSK terminal 300, a "refer log data" command 605 shown in FIG. 4(b) is issued from the KIOSK terminal 300 (625). The point application 110 in the smart card 101 returns log data 130 to the KIOSK terminal 300 (626).

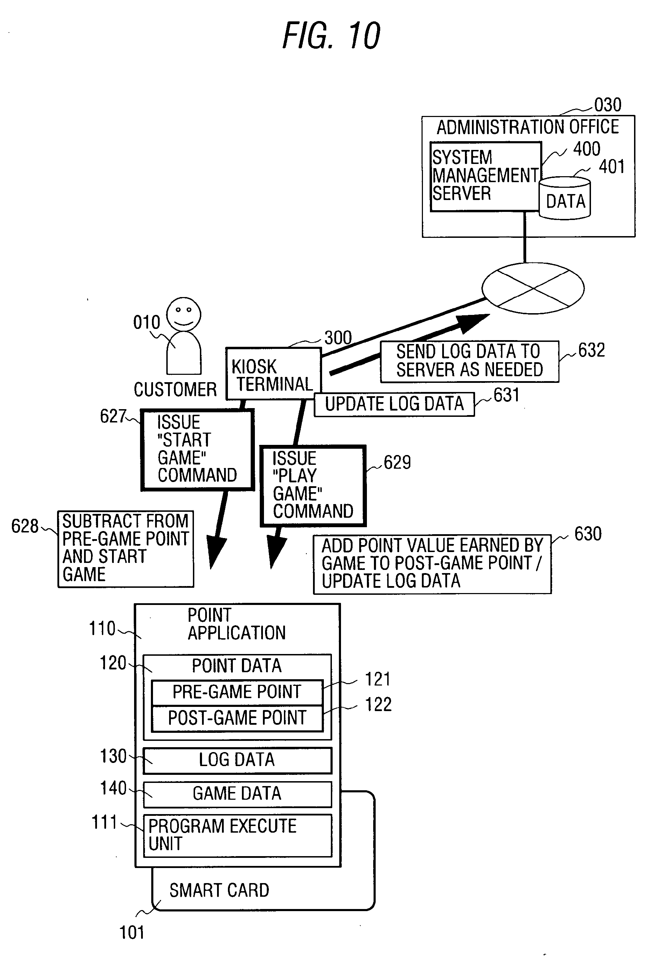

FIG. 10 shows the flow of processing of system components in game execution processing. The game execution processing is performed in terminals having a game function such as the KIOSK terminal 300. When the customer 010 performs the processing for the KIOSK terminal 300, a "start game" command 606 shown in FIG. 4(b) is issued from the KIOSK terminal 300 (627). The point application 110 in the smart card 101, if the pre-game point 121 is sufficient, subtracts a point value corresponding to the game from the pre-game point 121 and starts the game (628). If the pre-game point 121 is insufficient, the customer is notified of an error. The customer 010 plays the game according to the screen display of the KIOSK terminal 300. In response to customer's input, a "play game" command 607 shown in FIG. 4(b) is sent to the smart card 101 from the KIOSK terminal 300 (629). The point application 110 in the smart card 101 plays the game according to game data 140, and adds points gained as a result of the game to the post-game point 122. Upon termination of the game, a play result (the value of gained points) is added to the log data (630). The KIOSK terminal 300 adds a game execution log (631) and sends log data to the server 400 as needed (preferably in real time) (632). The server 400 adds the log data or a backup of point data to data 401.

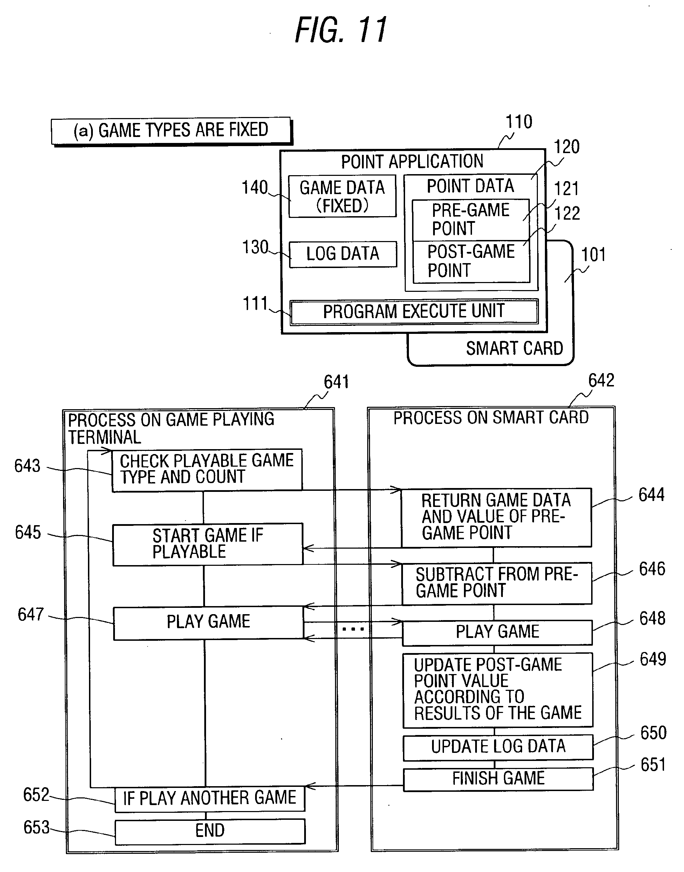

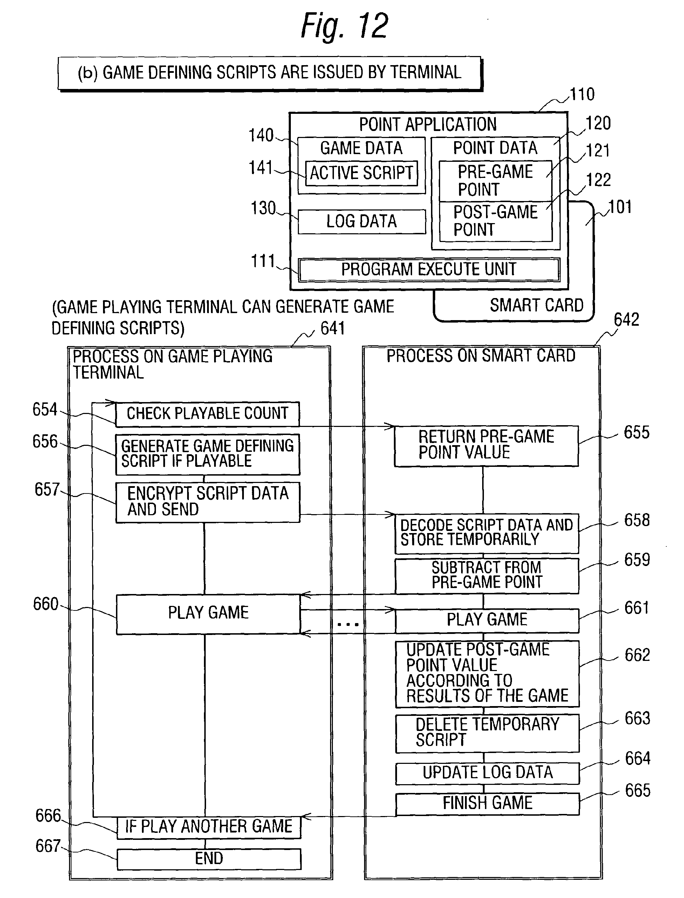

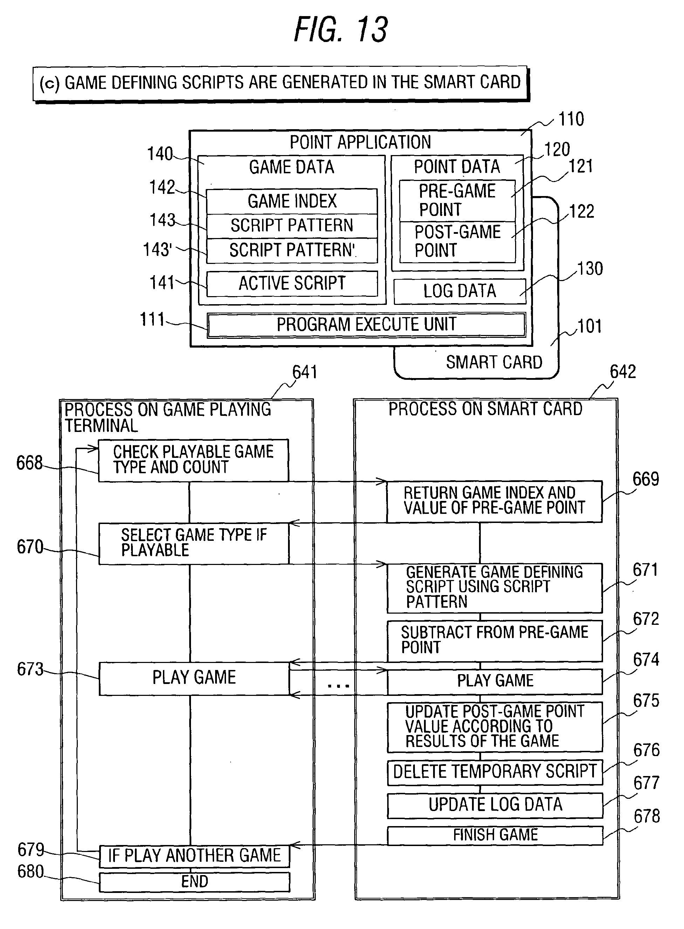

FIGS. 11 to 13 describes in detail how the game execution processing in FIG. 10 is performed according to the contents of game data 140. FIG. 11 shows the case where game types are fixed; FIG. 12, the case where game defining scripts are issued from a terminal; and FIG. 13, the case where game defining scripts are generated in the smart card. Although, in any case, as shown in FIG. 10, using the pre-game point 121, game is executed according to the game data 140, pre-game processing and post-game processing are somewhat different from each other. The relationship between processing 641 in game playing terminals and processing 642 in the smart card, and the flow of whole processing are described.

FIG. 11, where game types are fixed: The types of games defined in the game data 140 in the smart card are fixed.

When a terminal sends a command for checking the types and count of games playable on the smart card (643), the smart card returns game data (e.g., game ID, etc.) and the value of pre-game point (644). If playable, the game is started (645). The smart card subtracts a point value corresponding to the game to be executed (e.g., a point value given at a predetermined ratio such as an expected value of points gained by the game) from pre-game point (646). A "play game" command is sent from the terminal (647), and game execution is repeated on the smart card (648). If the result of game is gained, the value of post-game point is updated according to the result (649), card log data is updated (650), and game finish information is returned (651). If another game is executed (652), control is returned to the step of checking playable game type and count (643). If the customer does not continue game, the processing is terminated (653).

FIG. 12, where game defining scripts are issued from terminal: A game script sent from a terminal are temporarily stored in game data 140 in the smart card, and game is executed using the script 141. The terminal has a script generation function and a function for encrypting the script before sending it to the smart card.

When the terminal sends a command for checking playable count (654), the smart card returns the value of pre-game point (655). If playable, game is started, and a script for defining game specified by the customer (determined by the system) is created (656). The script is encrypted for the purpose of security and sent to the card (657). The smart card decrypts the received script and temporarily stores it in the card (658). The smart card subtracts a point value corresponding to the game to be executed from pre-game point (659), and plays the game (660), (661). If the result of game is gained, the value of post-game point is updated according to the result (662), the temporarily stored script is deleted (663), card log data is updated (664), and game finish information is returned (665). If another game is executed (666), control is returned to the step of checking playable game type and count (654). If the customer does not continue game, the processing is terminated (667).

FIG. 13, where game defining scripts are generated in the smart card: At least one type of script patterns 143 for generating game defining scripts is stored in game data 140 in the smart card, and the script patterns are replaceable. Game index information 142 is provided to identify the types of script patterns. The program execute unit 111 has a function for generating actual scripts from script patterns, and plays game using a game defining script 141 temporarily generated.

When the terminal sends a command for checking playable game types and count (668), the smart card returns a game type index and the value of pre-game point stored in the card (669). If playable, game is started (670). The smart card creates a script for defining game specified by the customer (determined by the system) from a script pattern in the card (671), subtracts a corresponding point value from pre-game point (672), and plays game (673), (674). If the result of game is gained, the value of post-game point is updated according to the result (675), the temporarily generated script is deleted (676), card log data is updated (677), and game finish information is returned (678). If another game is executed (666), control is returned to the step of checking playable game type and count (668). If the customer does not continue game, the processing is terminated (680).

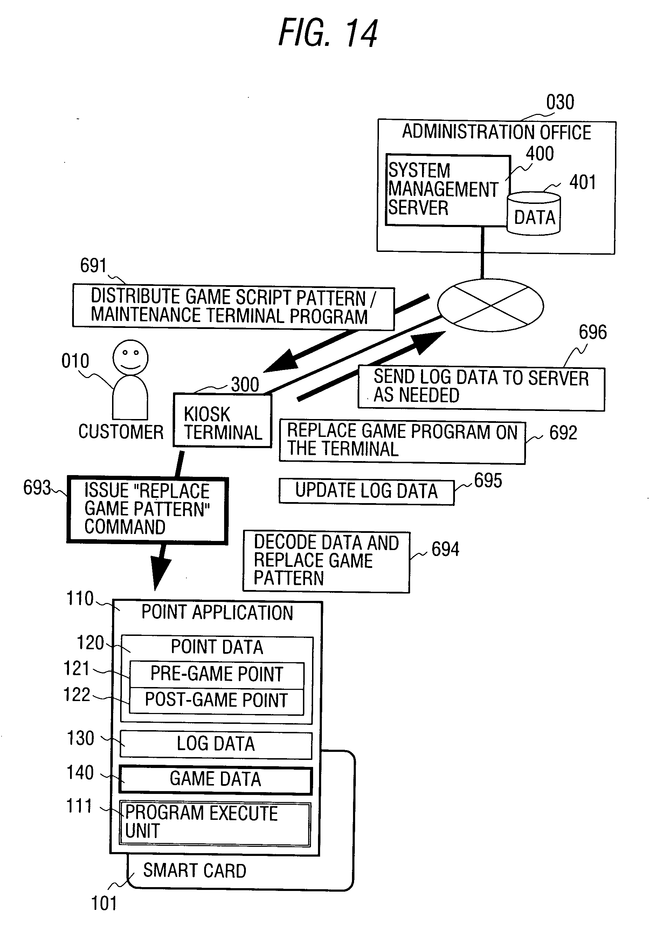

FIG. 14 shows the flow of processing of system components for game data replacement processing when game types are replaceable as shown in FIG. 13. From the system management office 030, during game type replacement, a script pattern to be stored in the card is distributed to each KIOSK terminal 300, and maintenance is performed on a game execution program of each terminal (691). In the KIOSK terminal 300, a game execution program is replaced (692), a "replace game data" command 609 shown in FIG. 4(b) is issued to the smart card 101 at an appropriate timing, and encrypted script pattern data is sent (693). The point application 110 of the smart card 101 decodes the sent data to replace game pattern (694). The KIOSK terminal 300 adds a game data replacement log (695) and sends log data to the server 400 as needed (695). The server 400 adds the log data to data 401.

This terminates the description of the flow of processing in the system that can be embodied by the present invention.

Processing on game execution and game data replacement described in FIGS. 10 to 14 can be performed independent of point processing described in FIGS. 5 to 9.

Accordingly, if game executable terminals including the KIOSK terminal 300 as a simple loyalty program are not provided with a game function, the loyalty program can operate as a normal loyalty program.

As a loyalty program with game, individual customers can select whether to play game, using plural KIOSK terminals provided in shops or department stores. Furthermore, as the entire system, whether or not to play game can be switched (switchable system).

Therefore, the system is usually used only as a loyalty program using the game executable terminals; game execution is enabled only during a limited period such as lotteries at the end of the year. In this way, whether or not to use a game function provided in the terminals can be easily switched, so that the system can be more flexibly operated.

The above described simple loyalty program, loyalty program with game, and switchable system can be embodied by using smart cards having functions such as point inquiry, point addition, point replacement, refund, log data reference, and game execution already described.

The following are technical points relating to the embodiment example of the present invention.
(1) A smart card having a first store area for storing points added from the outside, the first store area containing at least part of functions of game, wherein the game is not approved to play unless it is determined that the result of subtracting a proper value from a point value in the first store area is 0 or more, and wherein, as a result of the game execution, the result of subtracting the proper value from the point value of the first store area is a new point value of the first store area.
(2) The smart card of the above described point (1) is constructed so that points added according to the game result are stored in a second store area.
(3) In the smart card of the above described point (2), the first store area is used to store pre-game points, and the second store area is used to store post-game points.
(4) A smart card having a first store area for storing added points and a second store area for storing points added according to game results.
(5) The smart card of the above described point (4) is constructed so that the right to play the game is acquired using the point value of the first store area.
(6) The smart card of the above described point (4) is constructed so that, when a point service is to be received using the point value of the first and/or second store areas, a required point value is subtracted from the point value of the second area in preference to the point value of the first area.
(7) The smart card of the above described point (4) is constructed so that, where it is necessary to subtract already-added points in refund processing, a required point value is subtracted from the point value of the first store area in preference to the point value of the second store area.
(8) A smart card having a first area for storing points added from the outside and a second area for storing points added according to game results, wherein the game is playable when the point value of the first area is equal to or greater than a predetermined value.
(9) The smart card of the above described point (8), when a remaining point value is inquired, displays the sum of a point value of the first area and a point value of the second area, or the respective point values of the first and second areas in terminals.

As has been described above, points managed by the point application with game on the card are divided into two types, "pre-game point" and "post-game point", for the purpose of management, whereby shop terminals having a function to issue points need not be modified, customers not to play game can also enjoy reasonable exchange of gained points, and no complicated processing is required for a refund. Moreover, from the viewpoint of system management, by limiting the number of times customers can play game, points gained by game can be prevented from circulating infinitely.

According to the embodiment example of the present invention, since systems not having means for executing game operate as normal loyalty programs, whether or not to execute game can be easily switched by an identical card program, so that the operation of enabling game execution during a limited period can be easily achieved.

### [Effect of the Invention]

Accordingly, according to the embodiment example of the present invention, loyalty programs with game that execute game on the smart card can operate as normal loyalty programs as well, so that loyalty programs highly convenient to a system operation side can be provided.

### [Brief Description of the Drawings]

### [FIG. 1]

Drawing showing a system configuration

### [FIG. 2]

Drawing showing the operation of a smart card application

### [FIG. 3]

Drawing showing game execution on a smart card

### [FIG. 4]

Drawing showing the configuration of a point application

### [FIG. 5]

Drawing showing point inquiry processing

### [FIG. 6]

Drawing showing point addition processing

### [FIG. 7]

Drawing showing point replacement processing

### [FIG. 8]

Drawing showing refund processing

### [FIG. 9]

Drawing showing log data reference processing

### [FIG. 10]

Drawing showing game execution processing

### [FIG. 11]

Drawing showing a processing flow (1) during game execution

### [FIG. 12]

Drawing showing a processing flow (2) during game execution

### [FIG. 13]

Drawing showing a processing flow (3) during game execution

### [FIG. 14]

Drawing showing game data replacement processing

### [Explanation of the Reference Numerals]

010 ... Customer, 020 ... Shop, 021 ... Clerk, 030 ... Administration office, 100 ... Smart card, 101 ... IC chip, 102 ... OS for smart card, 103 ... Payment application on smart card, 104 ... Application program, 105 ... I/O interface, 110 ... Point application for smart card, 111 ... Program execute unit, 112 ... Game execute unit, 113 ... Data store unit, 114 ... Command input/output unit, 120 ... Point data, 121 ... Pre-game point, 122 ... Post-game point, 130 ... Log data, 140 ... Game data, 141 ... Active script, 142 ... Game index, 143 ... Script pattern, 150 ... Contents define, 151 ... Rights to play, 160 ... Data store unit, 200 ... Shop terminal, 300 ... KIOSK terminal, 310 ... PC, 311 ... R/W for smart card, 320 ... Portable terminal, 400 ... System management terminal, 401 ... System management data, 410 ... WWW server, 411 ... Private line or ordinary line, 412 ... Internet, 500 ... Terminal for smart card, 501 ... I/O interface, 502 ... Terminal OS, 503 ... Terminal program, 504 ... R/W for smart card, 511 ... User input processing, 512 ... Generate command, 513 ... Send command, 514 ... Analyze command, execute and generate response, 515 ... Return response, 516 ... Show results, 601 ... "inquire point value" command, 602 ... "add point" command, 604 ... "refund" command, 603 ... "exchange point" command, 605 ... "refer log data" command, 606 ... "start game" command, 607 ... "play game" command, 608 ... "refer game data" command, 609 ... "replace game data" command, 611 to 632 ... Processing procedure, 641 ... Process on game playing terminal, 642 ... Process on smart card, 643 to 680 ... Processing procedure, 691 to 698 ... Processing procedure

## Claims

1. A smart card system including a smart card (100) incorporating an IC chip (101) having CPU, a storing means (160), and an I/O interface (105), in which:
point data (120) are managed by an application program (104) running on the smart card; and
the application program has a program for executing game and the values of the points may differ depending on the result of game executing the program,
wherein point data is managed divided into first points which are required for game execution and whose point values are subtracted according to game execution, and second points in which points gained as a result of game execution are accumulated.

2. A smart card (100) in a smart card system including a smart card incorporating an IC chip (101) having CPU, a storing means (160), and an I/O interface (105), in which:
point data (120) are managed by an application program (104) running on the smart card; and
the application program has a program for executing game and the values of the points may differ depending on the result of game executing the program,
wherein the smart card has a function to manage point data, dividing it into first points which are required for game execution and whose point values are subtracted according to game execution, and second points in which points gained as a result of game execution are stored.

3. The smart card according to claim 2, wherein, when the value of points stored in the smart card is inquired, the sum of the first points and the second points is returned.

4. The smart card according to claim 2, wherein, when points are newly added to the smart card from the outside, a point value is added to the first points.

5. The smart card according to claim 2, wherein, when points are to be subtracted from the smart card to receive a service corresponding to the value of the points, a point value is firstly subtracted from the second points, and also subtracted from the first points if the second points are insufficient.

6. The smart card according to claim 2, wherein, when points are to be subtracted from the smart card to accept return, a point value is firstly subtracted from the first points, and also subtracted from the second points if the first points are insufficient.

7. The smart card according to claim 2, wherein, when game is to be executed on the smart card, a point value determined corresponding to the game to be executed is subtracted from the first points, and if the point value is insufficient, the game cannot be executed.

8. The smart card according to claim 2, wherein, when points are to be gained according to the result of executing game on the smart card, a point value is added to the second points.

9. The smart card according to claim 2, wherein log data on processing of an application on the smart card is stored in the smart card and the log data can be referred to from the outside.

10. The smart card system according to claim 1, wherein there are plural terminals capable of handling the smart card and it can be selected whether to provide the plural terminals with a game execution function.

11. The smart card system according to claim 1, wherein, since a function to execute the game or a function not to execute the game can be selected, a terminal handling the smart card is usually used only as a loyalty program and it can be easily selected whether or not to use a game execution function included in the terminal.

12. A method for loyalty program using a smart card, comprising the steps of:
managing point data by an application program on the smart card;
issuing the points at the time of product purchase and adding them to the smart card;
providing a proper service to customers not playing game, according to points accumulated in the smart card; and
for customers to play the game, using the points added to the smart card without using points gained from game results.

13. The method for loyalty program according to claim 12, wherein the step of, for customers to play the game, using the points added to the smart card without using points gained from game results includes the step of subtracting a predetermined point value corresponding to the game to be executed from the points managed by the application program to limit the number of times the customers can play games.
